# EUROPEAN PATENT APPLICATION

(11) **EP 2 631 141 A1**
(43) Date of publication of application: **28.08.2013**
(21) Application number: 11834454.8
(22) Date of filing: 20.10.2011
(51) Int. Cl.: B60W 10/10, B60K 6/48, B60K 6/547, B60L 11/14, B60W 10/06, B60W 10/08, B60W 20/00, F02D 29/00, F02D 29/02, F02D 29/06

(54) **DRIVING MODE CONTROL DEVICE, HYBRID VEHICLE, DRIVING MODE CONTROL METHOD, AND PROGRAM**

(30) Priority: 21.10.2010 JP 2010236605
(71) Applicant: Hino Motors Ltd., Tokyo 191-8660 (JP)
(72) Inventor: UENO, Hirotaka, Hino-shi Tokyo 191-8660 (JP)
(74) Representative: Skone James, Robert Edmund
(86) International application number: PCT/JP2011/074210
(87) International publication number: WO 2012/053615

(57) **Abstract**

In order to suitably change the driving feel of a hybrid vehicle depending on the preference of the driver, the hybrid vehicle includes a driving mode control section that, when a first shift schedule is selected, executes the first shift schedule by performing control such that the driving time by the electric motor becomes longer than the driving time by the engine, and that, when a second shift schedule is selected, executes the second shift schedule by performing control such that the driving time by the engine does not become shorter than the driving time by the electric motor.

## Description

### {Technical Field}

The present invention relates to a driving mode control device, a hybrid vehicle, a driving mode control method, and a computer program.

### {Background Art}

In order to meet the driver's preference for a feeling of driving, there is a vehicle that includes a driving mode control device for selecting a driver's favorite driving mode from among a plurality of driving modes. In such a driving mode control device, for example, selecting a driving mode can change the shift schedule for automatic gear shifting.

Examples of the shift schedule include a normal shift schedule that is more adaptable for the potential of a vehicle (hereinafter, referred to as a first shift schedule), and a shift schedule for a powerful run that is for rapidly responding to an accelerator operation (hereinafter, referred to as a second shift schedule). At the first shift schedule, a shift from a gear number having a large gear ratio to a gear number having a small gear ratio (or, namely, a shift-up) is performed with a smaller rotational speed in comparison with at the second shift schedule. At the second shift schedule, the shift-up is performed with a larger rotational speed in comparison with at the first shift schedule. The former is more fuel-efficient than the latter although giving the driver a small feeling of acceleration. The latter is not fuel-efficient in comparison with the former although giving the driver a lot of feeling of acceleration (for example, see patent literature PTL1).

### {Citation List}

### {Patent Literature}

PTL1: JP 2008-128192 A

### {Summary of Invention}

### {Technical Problem}

The case in which the above-mentioned driving mode control device is applied to a hybrid vehicle will be described below.

A hybrid vehicle including an engine and an electric motor has three driving patterns. The first is to run with the engine, the second is to run with the electric motor, and the third is to run with the cooperation between the engine and the electric motor. One of the three driving patterns is selected according to a predetermined condition.

When the above-mentioned hybrid vehicle runs with the electric motor, the torque in the low speed area tends to be insufficient because an electric motor generally generates a maximum torque when the rotational speed increases to some degree. Under such a circumstance, in comparison with the driving with an engine, sometimes a sufficient feeling of acceleration cannot be obtained even if a conventional driving mode control device selects a shift schedule in which a shift from a gear number having a large gear ratio (starting gear number) to a gear number having a small gear ratio is performed with a relatively large accelerator opening or vehicle speed.

As described above, when a conventional driving mode control device is applied to a hybrid vehicle without any change, it is sometimes difficult to obtain the feeling of driving required by the driver.

In light of the foregoing, an objective of the present invention is to provide a driving mode control device, a hybrid vehicle, a driving mode control method, and a computer program that can suitably change the feeling of driving the hybrid vehicle according to the driver's preference.

### {Solution to Problem}

An aspect of the present invention is directed to a driving mode control device. According the present invention, the driving mode control device of a hybrid vehicle that includes an engine and an electric motor, that is capable of driving by the engine or the electric motor or capable of driving by a cooperation between the engine and the electric motor, and that includes shift schedule selection means for selecting a shift schedule for a transmission that automatically shifts gears according to a preset type of driving modes, wherein the shift schedule includes a first shift schedule and a second shift schedule that shift a gear number from a gear number having a large gear ratio to a gear number having a small gear ratio with different accelerator opening amounts or vehicle speeds, respectively, and the accelerator opening amount or vehicle speed of the first shift schedule is smaller than the accelerator opening amount or vehicle speed of the second shift schedule, includes:
a driving mode control unit that controls the vehicle to keep a driving time with the electric motor longer than a driving time with the engine and performs the first shift schedule when the first shift schedule is selected, and that controls the vehicle to keep the driving time with the engine not shorter than the driving time with the electric motor and performs the second shift schedule when the second shift schedule is selected.

For example, the driving mode control unit can prevent the vehicle from driving only with the electric motor when the second shift schedule is selected.

Further, when the first shift schedule has been selected at the time when a current travel is terminated, the driving mode control unit can store the shift schedule before the current travel is terminated and select the first shift schedule in advance when a next travel is started.

The driving mode control device further includes: a selection switch for selecting the first or the second shift schedule, wherein the selection switch includes a press button that shifts the driving mode at each press, and the driving mode control unit can select the second shift schedule when the press button is pressed longer than a predetermined period of time.

A further aspect of the present invention is directed to a hybrid vehicle. The hybrid vehicle according to the present invention includes the driving mode control device according to the present invention.

A further aspect of the present invention relates to a driving mode control method. According to the present invention, the driving mode control method of a hybrid vehicle that includes an engine and an electric motor, that is capable of driving by the engine or the electric motor or capable of driving by a cooperation between the engine and the electric motor, and that includes shift schedule selection means for selecting a shift schedule for a transmission that automatically shifts gears according to a preset type of driving modes, wherein the shift schedule includes a first shift schedule and a second shift schedule that shift a gear number from a gear number having a large gear ratio to a gear number having a small gear ratio with different accelerator opening amounts or vehicle speeds, respectively, and the accelerator opening amount or vehicle speed of the first shift schedule is smaller than the accelerator opening amount or vehicle speed of the second shift schedule, includes:
a driving mode control step for controlling the vehicle to keep a driving time with the electric motor longer than a driving time with the engine and performing the first shift schedule when the first shift schedule is selected, and for controlling the vehicle to keep the driving time with the engine not shorter than the driving time with the electric motor and performing the second shift schedule when the second shift schedule is selected.

The other aspect of the present invention relates to a computer program. The computer program according to the present invention causes an information processing apparatus to implement a function of the driving mode control device according to the present invention.

### {Advantageous Effects of Invention}

The present invention can suitably change the feeling of driving the hybrid vehicle in accordance with the driver's preference.

### {Brief Description of Drawings}

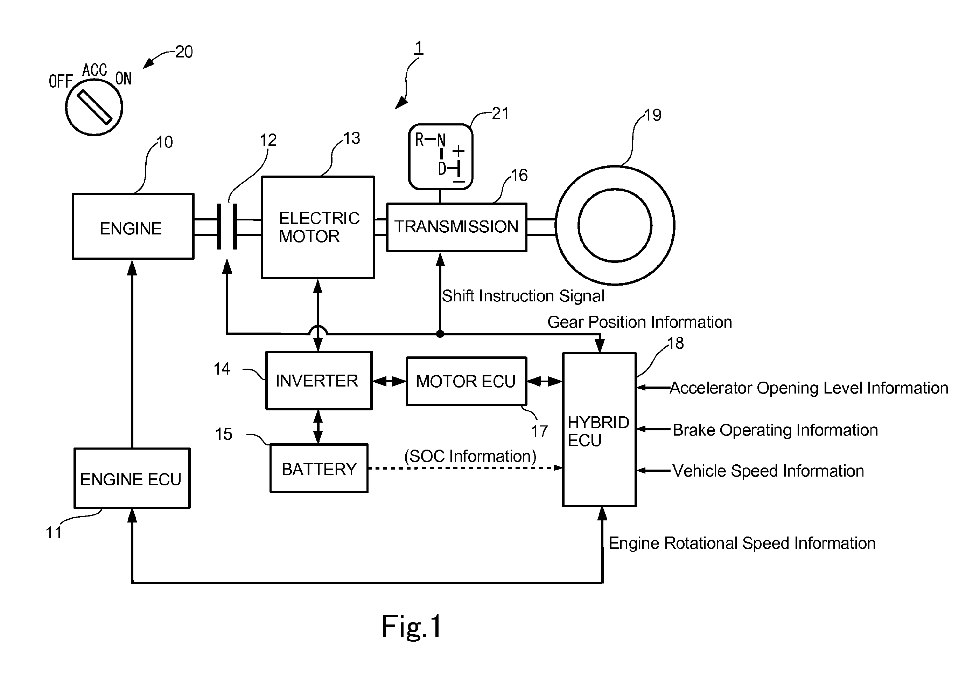

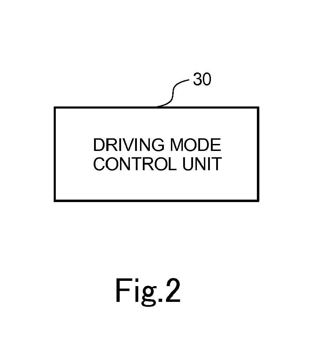

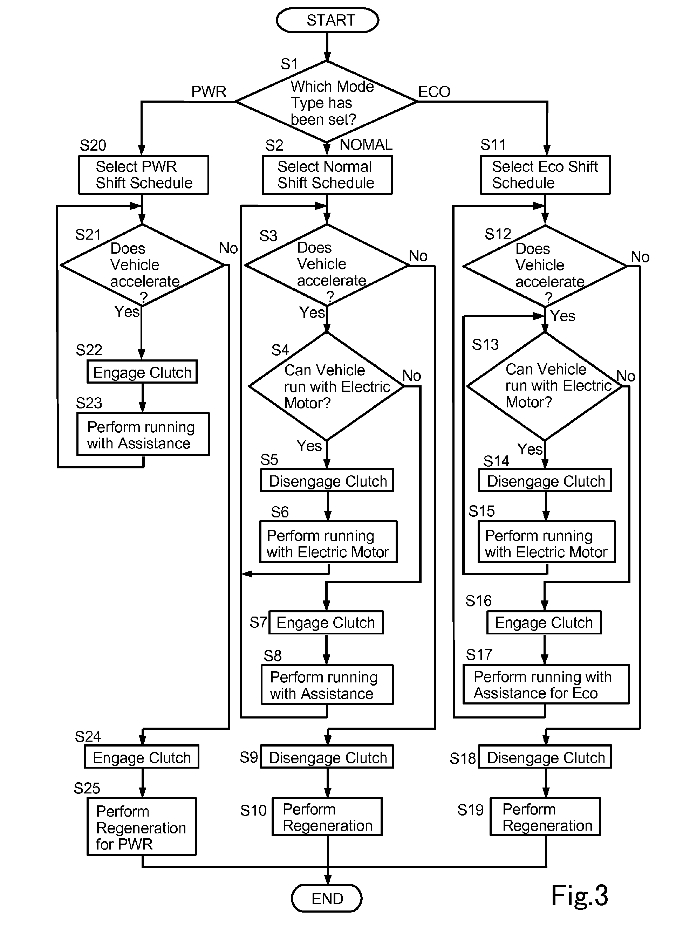

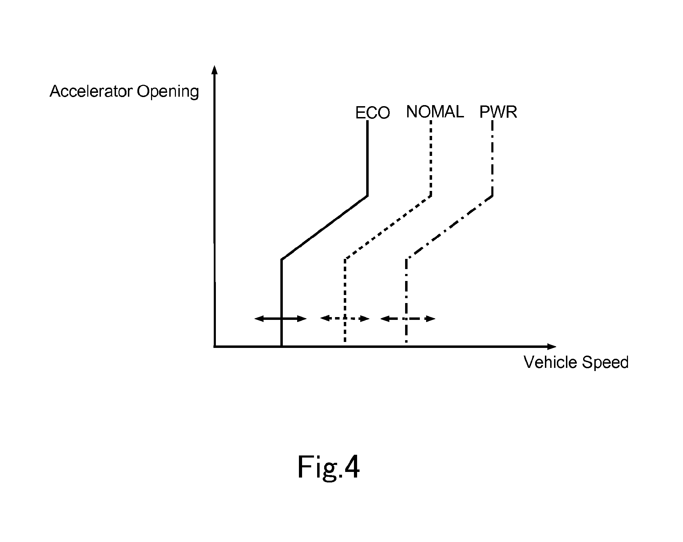

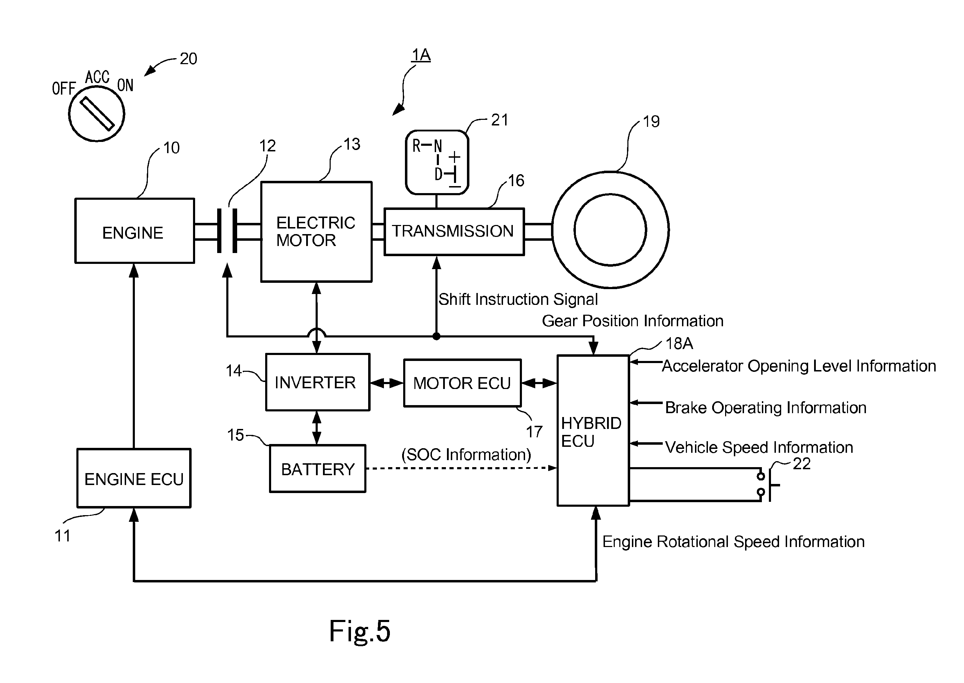

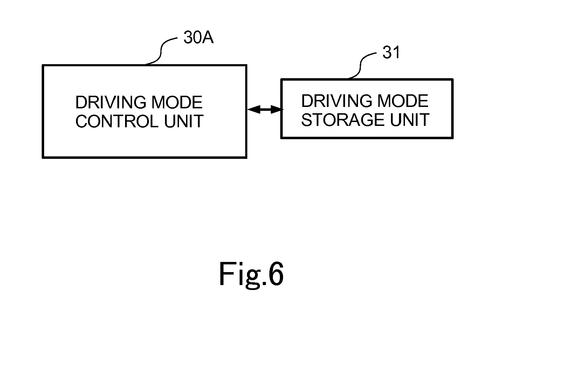

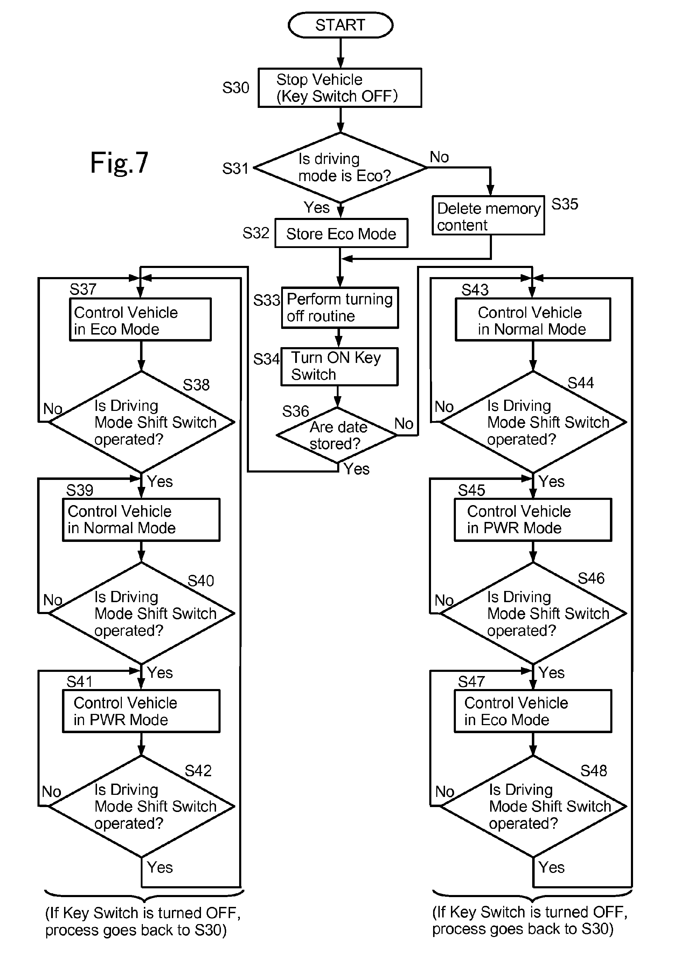

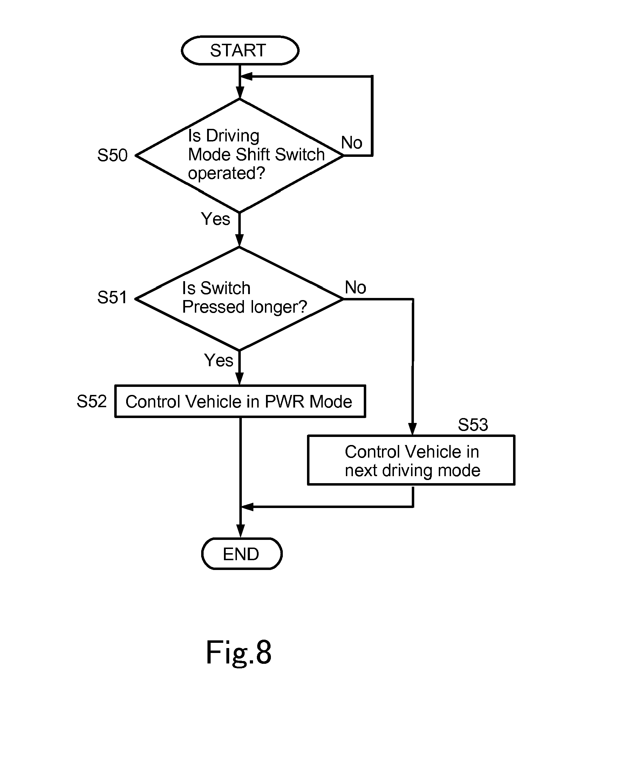

{Fig. 1} Fig. 1 is a block diagram for illustrating an exemplary structure of a hybrid vehicle according to a first embodiment.
{Fig. 2} Fig. 2 is a block diagram for illustrating an exemplary configuration of a function implemented in a hybrid ECU illustrated in Fig. 1.
{Fig. 3} Fig. 3 is a flowchart for illustrating a process for selecting a driving mode by a driving mode control unit illustrated in Fig. 2.
{Fig. 4} Fig. 4 is a view for illustrating a roadmap of the shift schedule of the driving mode control unit illustrated in Fig. 2.
{Fig. 5} Fig. 5 is a block diagram for illustrating an exemplary structure of a hybrid vehicle according to a second embodiment.
{Fig. 6} Fig. 6 is a block diagram for illustrating an exemplary configuration of a function implemented in a hybrid ECU illustrated in Fig. 5.
{Fig. 7} Fig. 7 is a flowchart for illustrating a process for setting a driving mode by a driving mode control unit illustrated in Fig. 6.
{Fig. 8} Fig. 8 is a flowchart for illustrating a process for selecting a PWR mode by a driving mode control unit according to a third embodiment.

### {Description of Embodiments}

### {First embodiment}

Hereinafter, the hybrid vehicle according to the first embodiment of the present invention will be described with reference to Figs. 1 to 4.

Fig. 1 is a block diagram for illustrating an exemplary structure of a hybrid vehicle 1. The hybrid vehicle 1 is an example of a vehicle. The hybrid vehicle 1 is driven by an engine (internal combustion engine) 10 and/or an electric motor 13 through a gearbox that includes an automated mechanical/manual transmission. The hybrid vehicle 1 can select a driving mode from among a plurality of driving modes. Here, the driving mode is a control pattern for controlling the hybrid vehicle 1 in order to implement a type of drivability. A plurality of driving modes is set and a driving mode is suitably selected according to the driver's preference. Note that the automated mechanical/manual transmission is a transmission that can automatically perform a gear shifting operation (in claims, referred to as automatically shifts gears) while having the same structure as a manual transmission.

The hybrid vehicle 1 includes the engine 10, an engine Electronic Control Unit (ECU) 11, a clutch 12, the electric motor 13, an inverter 14, a battery 15, a transmission 16, a motor ECU 17, a hybrid ECU 18, a wheel 19, and a key switch 20. Note that the transmission 16 includes the above-mentioned automated mechanical/manual transmission and a shift unit 21, and is operated by the shift unit 21 including a drive range (hereinafter, referred to as a D (Drive) range).

The engine 10 is an example of an internal combustion engine, and is controlled by the engine ECU 11. The engine 10 internally combusts gasoline, light oil, Compressed Natural Gas (CNG), Liquefied Petroleum Gas (LPG), alternative fuel, or the like in order to generate power for rotating a shaft and transmit the generated power to the clutch 12.

The engine ECU 11 is a computer working in coordination with the motor ECU 17 according to the instructions from the hybrid ECU 18, and controls the engine 10, for example, the amount of fuel injection and the valve timing. For example, the engine ECU 11 includes a Central Processing Unit (CPU), an Application Specific Integrated Circuit (ASIC), a microprocessor (micro computer), a Digital Signal Processor (DSP), and the like, and internally has an operation unit, a memory, an Input/Output (I/O) port, and the like.

The clutch 12 is controlled by the hybrid ECU 18, and transmits the shaft output from the engine 10 to the wheel 19 through the electric motor 13 and the transmission 16. In other words, the clutch 12 mechanically connects the rotating shaft of the engine 10 to the rotating shaft of the electric motor 13 by the control of the hybrid ECU 18 in order to transmit the shaft output of the engine 10 to the electric motor 13. On the other hand, the clutch 12 cuts the mechanical connection between the rotating shaft of the engine 10 and the rotating shaft of the electric motor 13 so that the shaft of the engine 10 and the rotating shaft of the electric motor 13 can rotate at different rotational speeds from each other.

For example, the clutch 12 mechanically connects the rotating shaft of the engine 10 to the rotating shaft of the electric motor 13, for example, when the hybrid vehicle 1 is driven by the power of the engine 10 and this causes the electric motor 13 to generate electric power, when the driving force of the electric motor 13 assists the engine 10, and when the electric motor 13 starts the engine 10.

Further, for example, the clutch 12 cuts the mechanical connection between the rotating shaft of the engine 10 and the rotating shaft of the electric motor 13 when the engine 10 is stopping or is in an idling state and the hybrid vehicle 1 is driven by the driving force of the electric motor 13, and when the hybrid vehicle 1 reduces the speed or runs on the downgrade and the electric motor 13 generates (regenerates) electric power while the engine 10 is stopping or is in an idling state.

Note that the clutch 12 differs from a clutch operated by the driver's operation of a clutch pedal, and is operated by the control of the hybrid ECU 18.

The electric motor 13 is a so-called motor generator that supplies a shaft output to the transmission 16 by generating the power for rotating the shaft using the electric power supplied from the inverter 14, or that supplies electric power to the inverter 14 by generating the electric power using the power for rotating the shaft supplied from the transmission 16. For example, when the hybrid vehicle 1 gains the speed or runs at a constant speed, the electric motor 13 generates the power for rotating the shaft to supply the shaft output to the transmission 16 in order to cause the hybrid vehicle 1 to run in cooperation with the engine 10. Further, the electric motor 13 works as an electric generator, for example, when the electric motor 13 is driven by the engine 10, or when the hybrid vehicle 1 runs without power, for example, when the hybrid vehicle 1 reduces the speed or runs on the downgrade. In that case, electric power is generated by the power for rotating the shaft supplied from the transmission 16 and is supplied to the inverter 14 in order to charge the battery 15.

The inverter 14 is controlled by the motor ECU 17, and converts the direct voltage from the battery 15 into an alternating voltage or converts the alternating voltage from the electric motor 13 into a direct voltage. When the electric motor 13 generates power, the inverter 14 converts the direct voltage from the battery 15 into an alternating voltage and supplies the electric power to the electric motor 13. When the electric motor 13 generates electric power, the inverter 14 converts the alternating voltage from the electric motor 13 into a direct voltage. In other words, in that case, the inverter 14 works as a rectifier and a voltage regulator for supplying a direct voltage to the battery 15.

The battery 15 is a secondary cell capable of being charged and discharged. The battery 15 supplies electric power to the electric motor 13 through the inverter 14 when the electric motor 13 generates power. Alternatively, the battery 15 is charged with the electric power generated by the electric motor 13 when the electric motor 13 generates electric power.

The transmission 16 includes an automated mechanical/manual transmission (not shown in the drawings) that selects one of a plurality of gear ratios (change gear ratios) according to the shift instruction signal to shift gears from the hybrid ECU 18 in order to shift the change gear ratios and transmit the gear-shifted power of the engine 10 and/or of the electric motor 13 to the wheel 19. Alternatively, the transmission 16 transmits the power from the wheel 19 to the electric motor 13, for example, when the vehicle reduces the speed or runs on the downgrade. Note that the automated mechanical/manual transmission can also shift the gear position to a given gear number by the driver's hand operation of the shift unit 21.

The motor ECU 17 is a computer working in coordination with the engine ECU 11 according to the instructions from the hybrid ECU 18, and controls the electric motor 13 by controlling the inverter 14. For example, the motor ECU 17 includes a CPU, an ASIC, a microprocessor (micro computer), a DSP, and the like, and internally has an operation unit, a memory, an I/O port, and the like.

The hybrid ECU 18 is an example of a computer. For hybrid driving, the hybrid ECU 18 obtains accelerator opening amount information, brake operation information, vehicle speed information, the gear position information obtained from the transmission 16, and the engine rotational speed information obtained from the engine ECU 11 in order to refer to the information, control the clutch 12 and supply the shift instruction signal to shift gears in order to control the transmission 16. For hybrid driving, the hybrid ECU 18 further gives the control instructions of the electric motor 13 and the inverter 14 to the motor ECU 17 based on the obtained SOC information on the battery 15 and other information, and gives the control instruction of the engine 10 to the engine ECU 11. For example, the hybrid ECU 18 includes a CPU, an ASIC, a microprocessor (micro computer), a DSP, and the like, and internally has an operation unit, a memory, an I/O port, and the like.

Note that a computer program to be executed by the hybrid ECU 18 can be installed on the hybrid ECU 18 that is a computer in advance by being stored in a non-volatile memory inside the hybrid ECU 18 in advance.

The engine ECU 11, the motor ECU 17, and the hybrid ECU 18 are connected to each other, for example, through a bus complying with the standard of the Control Area Network (CAN) or the like.

The wheel 19 is a drive wheel for transmitting the driving force to the road surface. Note that, although only a wheel 19 is illustrated in Fig. 1, the hybrid vehicle 1 actually includes a plurality of the wheels 19.

The key switch 20 is a switch that is turned ON/OFF, for example, by insertion of a key by the user at the start of drive. Turning ON the key switch activates each unit of the hybrid vehicle 1, and turning OFF the key switch stops each unit of the hybrid vehicle 1.

Fig. 2 is a block diagram for illustrating an exemplary configuration of a function implemented in the hybrid ECU 18 executing a computer program. In other words, when the hybrid ECU 18 executes a computer program, the function of a driving mode control unit 30 is implemented. The driving mode control unit 30 is a function for controlling the gear position by sending, to the transmission 16, a shift instruction signal t to shift gears.

Next, the process of the driving mode selection control performed in the hybrid ECU 18 executing the computer program will be described with reference to the flowchart illustrated in Fig. 3 and the roadmap of a shift schedule illustrated in Fig. 4. Note that the procedures in the flowchart of Fig. 3 are a cycle of the process, and the process is repeatedly performed as long as the key switch 20 of the hybrid vehicle 1 is the ON state.

Here, each of the driving modes will be described. An "ECO mode" is a driving mode for prioritizing the reduction in the gas emission from the hybrid vehicle 1 and the improvement of the fuel efficiency. At the ECO mode, while the driving with the electric motor 13 is prioritized, the shift schedule in which the shift from a gear number having a large gear ratio to a gear number having a small gear ratio is performed with the smallest accelerator opening amount or vehicle speed in comparison with the other driving modes is executed. A "PWR mode" is a driving mode for prioritizing the acceleration of the hybrid vehicle 1. At the PWR mode, while the driving with the engine 10 is prioritized, the shift schedule in which the shift from a gear number having a large gear ratio to a gear number having a small gear ratio is performed with the largest accelerator opening amount or vehicle speed in comparison with the other driving modes is executed. A "NOMAL mode" is a general driving mode for performing similar driving as a vehicle that does not include a function for shifting a driving mode. Thus, the "NOMAL mode" has a shift schedule intermediate between the "ECO mode" and the "PWR mode".

In the "START" illustrated in Fig. 3, when turning ON the key switch 20 enables the hybrid vehicle 1 to run, the process goes to step S1. At that time, the hybrid ECU 18 has executed a computer program, and the driving mode control unit 30 is implemented in the hybrid ECU 18.

In step S1, the driving mode control unit 30 determines which mode type has been set by the driver. When it is determined in step S1 that the set mode type is the "NOMAL (normal) mode", the process goes to step S2. When it is determined in step S1 that the set mode type is the "ECO mode", the process goes to step S11. When it is determined in step S1 that the set mode type is the "PWR (power) mode", the process goes to step S20.

In step S2, the driving mode control unit 30 selects a "NOMAL shift schedule".

Here, the details of the shift schedule will be described with reference to Fig. 4. In Fig. 4, the rotational speed is shown on the ordinate and the vehicle speed is shown on the abscissa. In Fig. 4, the shift schedule in the ECO mode is shown with a solid line, the shift schedule in the NOMAL mode is shown with a broken line, and the shift schedule in the PWR mode is shown with an alternate long and short dash line. The gear number of the left side area of each of the shift schedules is different from the gear number of the right side area by one gear number. The gear number of the left side area has a larger gear ratio than that of the right side area.

As shown in Fig. 4, on the same accelerator opening amount, the shift among the gear numbers is performed with a larger vehicle speed in the NOMAL mode in comparison with in the ECO mode. Similarly, on the same accelerator opening amount, the shift among the gear numbers is performed with a larger vehicle speed in the PWR mode in comparison with in the NOMAL mode. This shows that the feeling of acceleration given to the driver becomes large in ascending order from the ECO mode, the NOMAL mode, to the PWR mode, when the modes are compared with each other on the same accelerator opening amount. Further, this shows that the fuel consumption increases in ascending order from the ECO mode, the NOMAL mode, to the PWR mode, when the modes are compared with each other on the same accelerator opening amount.

In step S3, the driving mode control unit 30 determines whether the hybrid vehicle 1 is accelerating. When it is determined that the hybrid vehicle 1 is accelerating (for example, when the accelerator continues to be depressed), the process goes to step S4. On the other hand, when it is determined in step S3 that the hybrid vehicle 1 is not accelerating (for example, when the driver's foot steps off the accelerator), the process goes to step S9.

In step S4, the driving mode control unit 30 determines whether the hybrid vehicle 1 can run with the electric motor. Specifically, it is determined whether the output of the electric motor 13 can cover the request torque according to the accelerator opening amount. When it is determined in step S4 that the hybrid vehicle 1 can run with by the electric motor, the process goes to step S5. On the other hand, when it is determined in step S4 that the hybrid vehicle 1 cannot run with the electric motor, the process goes to step S7.

In step S5, the driving mode control unit 30 disengages the clutch 12. This disconnects an output shaft of the engine 10 from an output shaft of the electric motor 13.

In step S6, the driving mode control unit 30 performs the driving with the electric motor. In other words, the clutch 12 is in the disengaged state and the electric motor 13 causes the hybrid vehicle 1 to run while disconnected from the engine 10.

In step S7, the driving mode control unit 30 engages the clutch 12. This connects the output shaft of the engine 10 to the output shaft of the electric motor 13.

In step S8, the driving mode control unit 30 performs the driving with assistance and the process goes back to step S3. In other words, the cooperation between the engine 10 and the electric motor 13 causes the hybrid vehicle 1 to run.

In step S9, the driving mode control unit 30 disengages the clutch 12 and the process goes to step S10. This disconnects the output shaft of the engine 10 from the output shaft of the electric motor 13.

In step S10, the driving mode control unit 30 performs regeneration with the electric motor 13, and terminates a cycle of the process. In other words, the rotation of the wheel 19 during the deceleration of the hybrid vehicle 1 drives the electric motor 13 as an electric generator so that the electric motor 13 performs regeneration.

In step S11, the driving mode control unit 30 selects an "ECO shift schedule" and the process goes to step S12.

In step S12, the driving mode control unit 30 determines whether the hybrid vehicle 1 is accelerating. When it is determined in step S12 that the hybrid vehicle 1 accelerates, the process goes to step S13. On the other hand, when it is determined in step S12 that the hybrid vehicle 1 is not accelerating, the process goes to step S18.

In step S13, the driving mode control unit 30 determines whether the hybrid vehicle 1 can run with the electric motor. When it is determined in step S13 that the hybrid vehicle 1 can run with the electric motor, the process goes to step S14. On the other hand, when it is determined in step S13 that the hybrid vehicle 1 cannot run with the electric motor, the process goes to step S16. Specifically, it is determined whether the output of the electric motor 13 can cover the request torque according to the accelerator opening amount.

In step S14, the driving mode control unit 30 disengages the clutch 12 and the process goes to step S15. This disconnects the output shaft of the engine 10 from the output shaft of the electric motor 13.

In step S15, the driving mode control unit 30 performs the driving with the electric motor and the process goes back to step S13. In other words, the electric motor 13 independently transmits power to the transmission 16 while disconnected from the engine 10.

In step S16, the driving mode control unit 30 engages the clutch 12 and the process goes to step S17. This connects the output shaft of the engine 10 to the output shaft of the electric motor 13.

In step S17, the driving mode control unit 30 performs a "driving with assistance for ECO" and the process goes back to step S12. Note that the "driving with assistance for ECO" is a driving with assistance that is performed while the amount of the fuel injection according to the accelerator opening amount is reduced to less than that when the NOMAL mode is selected.

In step S18, the driving mode control unit 30 disengages the clutch 12 and the process goes to step S19. This disconnects the output shaft of the engine 10 from the output shaft of the electric motor 13.

In step S19, the driving mode control unit 30 performs regeneration with the electric motor 13, and terminates a cycle of the process. In other words, the rotation of the wheel 19 during the deceleration of the hybrid vehicle 1 drives the electric motor 13 as an electric generator so that the electric motor 13 performs regeneration.

In step S20, the driving mode control unit 30 selects a "PWR shift schedule" and the process goes to step S21.

In step S21, the driving mode control unit 30 determines whether the hybrid vehicle 1 is accelerating. When it is determined in step S21 that the hybrid vehicle 1 is accelerating rates, the process goes to step S22. On the other hand, when it is determined in step S21 that the hybrid vehicle 1 is not accelerating, the process goes to step S24.

In step S22, the driving mode control unit 30 engages the clutch 12 and the process goes to step S23. This connects the output shaft of the engine 10 to the output shaft of the electric motor 13.

In step S23, the driving mode control unit 30 performs the driving with assistance and the process goes back to step S21. In other words, the cooperation between the engine 10 and the electric motor 13 causes the hybrid vehicle 1 to run.

In step S24, the driving mode control unit 30 engages the clutch 12 and the process goes to step S25. This connects the output shaft of the engine 10 to the output shaft of the electric motor 13.

In step S25, the driving mode control unit 30 performs "regeneration for PWR" with the electric motor 13, and terminates a cycle of the process. Note that the "regeneration for PWR" is regeneration that is performed while the clutch 12 connects the engine 10 to the electric motor 13, and is performed with relatively small regeneration torque to enhance the effect of the engine braking of the engine 10.

### {Effects}

When the ECO mode is selected, the hybrid vehicle 1 performs the "ECO shift schedule" while driving with keeping the driving time with the electric motor 13 longer than the driving time with the engine 10 and when the PWR mode is selected, the hybrid vehicle 1 performs the "PWR shift schedule" while driving with keeping the driving time with the engine 10 not shorter than the driving time with the electric motor 13. Thus, the feeling of driving can suitably be changed according to the driver's preference.

For example, in the PWR mode, as described in steps S21 and S22 illustrated in Fig. 3, when the hybrid vehicle 1 accelerates, the clutch 12 is immediately engaged and the driving with assistance is performed. This enables the hybrid vehicle 1 to run with high torque generated by the engine 10 and the electric motor 13 in the PWR mode. The feeling of acceleration required by the driver is achieved (according to steps S21 and S22, the vehicle can run with keeping the driving time with the engine 10 not shorter than the driving time with the electric motor 13).

Further, in the PWR mode, as described in steps S24 and S25 illustrated in Fig. 3, the regeneration for PWR is performed. Even while the regeneration is performed, the clutch 12 remains engaged. The regeneration is performed with relatively small regeneration torque. The clutch 12 remains engaged when the hybrid vehicle 1 shifts the driving pattern from deceleration to acceleration. This enables a smooth shift to the acceleration with the engine 10. Thus, the feeling of acceleration required by the driver can be achieved (according to steps S24 and S25, the vehicle can run with keeping the driving time with the engine 10 longer than the driving time with the electric motor 13).

On the other hand, in the ECO mode, as described in steps S13 to S15 illustrated in Fig. 3, once the driving with the electric motor 13 is performed, the vehicle is controlled to keep the driving with the electric motor 13 as long as the vehicle can run with the electric motor 13. Further, as described in step S17 illustrated in Fig. 3, even if it is difficult for the vehicle to run with the electric motor 13, the "driving with assistance for ECO" is performed with a smaller amount of the fuel injection according to the accelerator opening amount than that in the NOMAL mode. Thus, in the ECO mode, the hybrid vehicle 1 can achieve the high fuel efficiency required by the driver.

### {Second embodiment}

A hybrid vehicle 1A according to the second embodiment of the present invention will be described with reference to Figs. 5 to 7. Fig. 5 is a view for illustrating the whole structure of the hybrid vehicle 1A. The hybrid vehicle 1A has a structure that includes a driving mode selection switch 22 in addition to the structure of the hybrid vehicle 1. The driving mode selection switch 22 is a momentary switch, so that electricity is conducted between contact points only while an operator such as the driver presses a button part of the driving mode selection switch 22.

Fig. 6 is a block diagram for illustrating an exemplary configuration of a function that is implemented while a hybrid ECU 18A of the hybrid vehicle 1A executes a computer program. Fig. 7 is a flowchart for illustrating a process of a driving mode control performed by a driving mode control unit 30A of the hybrid ECU 18A. Once the hybrid ECU 18A executes a computer program, the driving mode control unit 30A and a driving mode storage unit 31 are implemented.

The driving mode control unit 30A is a function for controlling the gear position by sending, to the transmission 16, a shift instruction signal to shift gears, similarly to the driving mode control unit 30. The driving mode storage unit 31 is a memory for causing the driving mode control unit 30A to store a driving mode. A part of the region of the memory included in the hybrid ECU 18A can be allotted as the driving mode storage unit 31. However, the driving mode storage unit 31 is a non-volatile memory capable of maintaining the memory content even if the key switch 20 is in the OFF state. For example, when the hybrid ECU 18A does not include a non-volatile memory, a non-volatile memory such as a flash memory can externally be attached to the hybrid ECU 18A and be used as the driving mode storage unit 31.

When the hybrid vehicle 1A has run in the ECO mode immediately before stopping the travel, the driving mode control unit 30A of the hybrid vehicle 1A, prior to the stop of the travel of the hybrid vehicle 1A, stores the fact that the hybrid vehicle 1A has run in the ECO mode immediately before stopping the travel in the driving mode storage unit 31. Next time the hybrid vehicle 1A starts traveling, the driving mode control unit 30A sets the driving mode at the ECO mode in advance.

An operation of the driving mode control unit 30A of the hybrid vehicle 1A will be described with reference to the flowchart illustrated in Fig. 7. At the START illustrated in Fig. 7, the key switch 20 of the hybrid vehicle 1A is the ON state and the hybrid vehicle 1A travels. At that time, the driving mode control unit 30A and the driving mode storage unit 31 are implemented in the hybrid ECU 18A.

In step S30, the hybrid vehicle 1A is on the verge of stopping traveling and the key switch 20 is switched from the ON state to the OFF state. Then, the process goes to step S31. Note that, in the hybrid vehicle 1A, even if the key switch 20 is switched from the ON state to the OFF state, the supply of electric power to the hybrid ECU 18A is secured until at least the procedures in steps S30 to S33 of the process in Fig. 7 are terminated. For example, the key switch 20 includes a timer (delay circuit) (not shown in the drawings) in order to delay the time when the key switch 20 actually comes into the OFF state from the time when the key switch 20 has been switched to the OFF position.

In step S31, the driving mode control unit 30A determines whether the hybrid vehicle 1A has run in the ECO mode immediately before stopping the travel. When it is determined in step S31 that the hybrid vehicle 1A has run in the ECO mode immediately before stopping the travel, the process goes to step S32. On the other hand, when it is determined in step S31 that the hybrid vehicle 1A has not run in the ECO mode immediately before stopping the travel, the process goes to step S35.

In step S32, the driving mode control unit 30A stores the fact that the hybrid vehicle 1A has run in the ECO mode immediately before stopping the travel in the driving mode storage unit 31. Then the process goes to step S33.

In step S33, the hybrid vehicle 1A performs a turning OFF routine for stopping the travel and the process goes to step S34.

In step S34, once the key switch 20 has come into the ON state, the hybrid vehicle 1A starts traveling. Then, the process goes to step S36.

In step S36, the driving mode control unit 30A determines whether the driving mode storage unit 31 stores data. When it is determined in step S36 that the driving mode storage unit 31 stores data, the process goes to step S37. On the other hand, when it is determined in step S36 that the driving mode storage unit 31 does not store data, the process goes to step S43.

In step S37, the driving mode control unit 30A controls the vehicle in the ECO mode. Then, the process goes to step S38.

In step S38, the driving mode control unit 30A determines whether the driving mode selection switch 22 is operated. When it is determined in step S38 that the driving mode selection switch 22 is operated, the process goes to step S39. On the other hand, when it is determined in step S38 that the driving mode selection switch 22 is not operated, the process goes back to step S37.

In step S39, the driving mode control unit 30A controls the vehicle in the NOMAL mode. Then, the process goes to step S40.

In step S40, the driving mode control unit 30A determines whether the driving mode selection switch 22 is operated. When it is determined in step S40 that the driving mode selection switch 22 is operated, the process goes to step S41. On the other hand, when it is determined in step S40 that the driving mode selection switch 22 is not operated, the process goes back to step S39.

In step S41, the driving mode control unit 30A controls the vehicle in the PWR mode. Then, the process goes to step S42.

In step S42, the driving mode control unit 30A determines whether the driving mode selection switch 22 is operated. When it is determined in step S42 that the driving mode selection switch 22 is operated, the process goes back to step S37. On the other hand, when it is determined in step S42 that the driving mode selection switch 22 is not operated, the process goes back to step S41.

In step S43, the driving mode control unit 30A controls the vehicle in the NOMAL mode. Then, the process goes to step S44.

In step S44, the driving mode control unit 30A determines whether the driving mode selection switch 22 is operated. When it is determined in step S44 that the driving mode selection switch 22 is operated, the process goes to step S45. On the other hand, when it is determined in step S44 that the driving mode selection switch 22 is not operated, the process goes back to step S43.

In step S45, the driving mode control unit 30A controls the vehicle in the PWR mode. Then, the process goes to step S46.

In step S46, the driving mode control unit 30A determines whether the driving mode selection switch 22 is operated. When it is determined in step S46 that the driving mode selection switch 22 is operated, the process goes to step S47. On the other hand, when it is determined in step S46 that the driving mode selection switch 22 is not operated, the process goes back to step S45.

In step S47, the driving mode control unit 30A controls the vehicle in the ECO mode. Then, the process goes to step S48.

In step S48, the driving mode control unit 30A determines whether the driving mode selection switch 22 is operated. When it is determined in step S48 that the driving mode selection switch 22 is operated, the process goes back to step S43. On the other hand, when it is determined in step S48 that the driving mode selection switch 22 is not operated, the process goes back to step S47.

Note that, if the key switch 20 is turned OFF while the procedures in steps S37 to S42 or in steps S43 to S48 are performed, the process goes back to step S30.

### {Effects}

When the ECO mode has been set as the driving mode at the time when the hybrid vehicle 1A has stopped the current traveling, the hybrid vehicle 1A stores that driving mode before stopping the traveling. Next time the vehicle starts traveling, the ECO mode can be selected in advance. Thus, the driver can start driving the vehicle in the ECO mode when the driver selects the ECO mode at the start of the next traveling. This enhances the reduction in the gas emission and the improvement of the fuel efficiency.

Further, the driver starts driving the vehicle in the NOMAL mode when the driver selects the PWR mode at the start of the next traveling. This also enhances the reduction in the gas emission and the improvement of the fuel efficiency.

As an exemplary modification of the second embodiment, the ECO mode can be selected at the start of the next traveling even if the driver has selected any of the driving modes. Further, the driver can set which the ECO mode or the NOMAL mode is to be selected at the start of the next traveling.

### {Third embodiment}

A hybrid vehicle 1B according to the third embodiment of the present invention will be described with reference to the flowchart illustrated in Fig. 8. The hybrid vehicle 1B has the same structure as the hybrid vehicle 1A. The hybrid vehicle 1B will be described with reference signs in the same line (for example, the hybrid ECU 18B, or the driving mode control unit 30B).

Every time the driving mode selection switch 22 is pressed, the driving mode control unit 30B of the hybrid vehicle 1B shifts the driving mode. For example, when the driving mode selection switch 22 is pressed while the NOMAL mode has been selected, the ECO mode is selected. Similarly, when the driving mode selection switch 22 is pressed while the ECO mode has been selected, the PWR mode is selected. Similarly, when the driving mode selection switch 22 is pressed while the PWR mode has been selected, the NOMAL mode is selected.

In the hybrid vehicle 1B described herein, when the driving mode selection switch 22 is pressed longer (in claims, referred to as pressed longer than a predetermined period of time), the PWR mode is selected.

The above-mentioned process will be described with reference to the flowchart illustrated in Fig. 8. At the START, when the key switch 20 of the hybrid vehicle 1B is turned ON, the process goes to step S50. At that time, the driving mode control unit 30B is implemented in the hybrid ECU 18B.

In step S50, the driving mode control unit 30B is activated. Then, the driving mode control unit 30B determines whether the driving mode selection switch 22 is operated. When it is determined in step S50 that the driving mode selection switch 22 is operated, the process goes to step S51. On the other hand, when it is determined in step S50 that the driving mode selection switch 22 is not operated, the process of step S50 is repeated.

In step S51, the driving mode control unit 30B determines whether the driving mode selection switch 22 is pressed longer. When it is determined in step S51 that the driving mode selection switch 22 is pressed longer, the process goes to step S52. On the other hand, when it is determined in step S51 that the driving mode selection switch 20 is not pressed longer, the process goes to step S53.

In step S52, the driving mode control unit 30B controls the vehicle in the PWR mode and terminates a cycle of the process.

In step S53, the driving mode control unit 30B controls the vehicle in the next driving mode and terminates a cycle of the process.

### {Effects}

According to the hybrid vehicle 1B, when the driving mode selection switch 22 is pressed longer than a predetermined period of time (or, namely, pressed longer), the PWR mode is selected. Thus, the driver can immediately select the PWR mode as necessary without considering which driving mode has currently been selected. This enables the driver to select the PWR mode with a simple operation to press the driving mode selection switch 22 longer if the driver needs to accelerate the vehicle while overtaking on the expressway or the like. This gives the driver a sense of ease that the driver can accelerate the vehicle anytime it is necessary.

### {Other embodiment}

Further, the boundaries of the regions for determination can variously be changed, for example, the "equal to or more than" can be changed into "exceeds" and the "less than" can be changed into "equal to or less than" in the description of the above-mentioned flowchart.

Although the engine 10 has been described as an internal combustion engine, the engine 10 can also be a heat engine including an external combustion engine.

Further, while the computer program executed by the hybrid ECU 18, 18A, or 18B is installed on the hybrid ECU 18, 18A, or 18B in advance in the above-mentioned descriptions, the computer program can be installed on the hybrid ECU 18, 18A, or 18B as a computer by attaching removable media recording the computer program (storing the program), for example, to a drive (not shown in the drawings) and storing the program read from the removable media in a non-volatile memory inside the hybrid ECU 18, 18A, or 18B, or receiving, with a communication unit (not shown in the drawings), a computer program transmitted through a wired or wireless transmission medium and storing the computer program in a non-volatile memory inside the hybrid ECU 18, 18A, or 18B.

Further, each ECU can be implemented by an ECU combining some or all of the functions of the ECUs. Alternatively, an ECU can newly be provided by the further subdivision of the function of each ECU.

Note that the computer program executed by the computer can be for performing the process in chronological order according to the order described herein or can be for performing the process in parallel or at the necessary timing, for example, when the computer program is invoked.

Further, the embodiments of the present invention are not limited to the above-mentioned embodiments, and can variously be modified without departing from the gist of the invention.

### {Reference Signs List}

1: Hybrid vehicle
10: Engine
11: Engine ECU
12: Clutch
13: Electric motor
14: Inverter
15: Battery
16: Transmission
17: Motor ECU
18, 18A, 18B: Hybrid ECU (Driving mode control device)
19: Wheel
20: Key switch
22: Driving mode selection switch
30, 30A, 30B: Driving mode control unit
31: Driving mode storage unit

## Claims

1. A driving mode control device of a hybrid vehicle that includes an engine and an electric motor, that is capable of driving by the engine or the electric motor or capable of driving by a cooperation between the engine and the electric motor, and that includes shift schedule selection means for selecting a shift schedule for a transmission that automatically shifts gears according to a preset type of driving modes,
wherein the shift schedule includes a first shift schedule and a second shift schedule that shift a gear number from a gear number having a large gear ratio to a gear number having a small gear ratio with different accelerator opening amounts or vehicle speeds, respectively, and
the accelerator opening amount or vehicle speed of the first shift schedule is smaller than the accelerator opening amount or vehicle speed of the second shift schedule,
the driving mode control device comprising:
a driving mode control unit that controls the vehicle to keep a driving time with the electric motor longer than a driving time with the engine and performs the first shift schedule when the first shift schedule is selected, and that controls the vehicle to keep the driving time with the engine not shorter than the driving time with the electric motor and performs the second shift schedule when the second shift schedule is selected.

2. The driving mode control device according to claim 1,
wherein the driving mode control unit prevents the vehicle from driving only with the electric motor when the second shift schedule is selected.

3. The driving mode control device according to claim 1 or 2,
Wherein, when the first shift schedule has been selected at the time when a current travel is terminated, the driving mode control unit stores the shift schedule before the current travel is terminated and selects the first shift schedule in advance when a next travel is started.

4. The driving mode control device according to any of claims 1 to 3, further comprising:
a selection switch for selecting the first or the second shift schedule,
wherein the selection switch includes a press button that shifts the driving mode at each press, and
the driving mode control unit selects the second shift schedule when the press button is pressed longer than a predetermined period of time.

5. A hybrid vehicle comprising the driving mode control device according to any of claims 1 to 4.

6. A driving mode control method of a hybrid vehicle that includes an engine and an electric motor, that is capable of driving by the engine or the electric motor or capable of driving by a cooperation between the engine and the electric motor, and that includes shift schedule selection means for selecting a shift schedule for a transmission that automatically shifts gears according to a preset type of driving modes,
wherein the shift schedule includes a first shift schedule and a second shift schedule that shift a gear number from a gear number having a large gear ratio to a gear number having a small gear ratio with different accelerator opening amounts or vehicle speeds, respectively, and
the accelerator opening amount or vehicle speed of the first shift schedule is smaller than the accelerator opening amount or vehicle speed of the second shift schedule,
the driving mode control method comprising:
a driving mode control step for controlling the vehicle to keep a driving time with the electric motor longer than a driving time with the engine and performing the first shift schedule when the first shift schedule is selected, and for controlling the vehicle to keep the driving time with the engine not shorter than the driving time with the electric motor and performing the second shift schedule when the second shift schedule is selected.

7. A computer program for causing an information processing apparatus to implement a function of the driving mode control device according to any of claims 1 to 4.
